# EUROPEAN PATENT SPECIFICATION

(11) **EP 3 476 204 B1**
(45) Date of publication and mention of the grant of the patent: **14.04.2021**
(21) Application number: 18203341.5
(22) Date of filing: 30.10.2018
(51) Int. Cl.: A01F 25/13, A01F 25/16

(54) **ASSEMBLY AND METHOD FOR COVERING AND/OR UNCOVERING A SILAGE**
ANORDNUNG UND VERFAHREN ZUM ABDECKEN UND/ODER FREILEGEN EINER SILAGE
ENSEMBLE ET PROCÉDÉ POUR RECOUVRIR ET/OU DÉCOUVRIR UN ENSILAGE

(30) Priority: 30.10.2017 NL 2019830; 13.02.2018 NL 2020425
(43) Date of publication of application: 01.05.2019
(73) Proprietor: Jan Sake Bosch Holding B.V., 9008 SV Reduzum (NL)
(72) Inventor: Bosch, Jan Sake, 9008 SV Reduzum (NL); Bosch, Hotze, 9011 VD Jirnsum (NL)
(74) Representative: Verdijck, Gerardus

(56) References cited:
- EP-A1- 1 889 535
- EP-A1- 2 721 921
- EP-A2- 2 612 549
- EP-A2- 2 638 796
- US-A1- 2003 172 597

## Description

The invention relates to an assembly and a method for covering and/or uncovering a silage with a reusable cover sheet, as well as to a cover sheet for use with such an assembly.

It is known in practice to collect and store harvested products, such as grass, in a silage pile for later use as cattle fodder. Often, the silage pile is made in different layers of silage, also known as a lasagne deck, which is preferably made in a silage formed by two parallel extending side walls having a predetermined height. When during storing the predetermined height and length of a silage pile is achieved, the silage pile is covered with a reusable cover sheet to protect it from air and water influences, which may lead to rotting. It should be noted that the term silage pile is often interchangeably used with the term fodder, which are synonyms for the stored substance.

EP 2 638 796 A2 and EP 1 889 535 A1 disclose assemblies for covering a silage.

Furthermore, it is known in practice to apply the cover sheet to and/or remove the cover sheet from the silage either by means of a reel that is provided on a tractor or truck. The cover sheet is rolled onto or off from the reel depending whether the silage pile is to be covered or uncovered respectively.

A disadvantage of this existing assembly is that only a limited length of cover sheet can be carried on the reel due to the risk of toppling. This is mainly caused by the fact that the weight and size of a cover sheet increase by an increasing length of the cover sheet. Furthermore, it requires the use of a tractor or truck.

In order to solve this problem, NL1032330 discloses a frame having a reel, wherein the frame is placed on the silage walls and is movable along the silage wall with a set of wheels. The disadvantage of this assembly is that it is relatively inflexible and, for example, can only be used for the single silage on which it is positioned.

The invention is aimed at providing an improved assembly in which these disadvantages are obviated or at least reduced.

To this end, the invention provides an assembly for selectively covering and/or uncovering a silage with a reusable cover sheet, the assembly comprising:
- a frame that is moveable, wherein the frame is configured for being positionable over outer sides of two substantially parallel extending longitudinal side walls of the silage with at least part of the frame extending over substantially an entire width of the silage, wherein the frame comprises a sub-frame that is detachably coupled to the frame;
- a first reel position on the frame, wherein a first reel is operatively connectable to the frame such that it extends along a longitudinal axis over substantially an entire width of the silage;
- a second reel position on the sub-frame, wherein a second reel is operatively connectable to the sub-frame such that it extends along a longitudinal axis over substantially the entire width of the silage;
- a reel drive unit for driving the first and/or the second reel for rolling a reusable cover sheet on and/or unrolling the reusable cover sheet from the first and/or second reel for respectively uncovering and covering the silage with the reusable cover; and
- a drive unit for moving the assembly, wherein the assembly, during covering or uncovering of the silage with the reusable cover, is movable along a longitudinal direction of the silage.

The assembly according to the invention is movable along the longitudinal direction of the silage and is also configured to be movable from one silage to a different silage. This is performed by moving the assembly along and past the longitudinal side walls of the silage and subsequently in the desired direction, such as for example to a different silage nearby. This is achieved by providing the assembly in principle completely independent from the silage.

The assembly according to the invention has the advantage that it can be used for multiple silages at the same time. This is first of all due to the fact that the assembly is moveable independent of the silage to which it is applied. To this end, the assembly is provided with movement means, such as wheels or tracks, which are preferably rotatable to an angle of at least 90° to allow easy manoeuvring of the assembly and to allow it to be transported from one silage to a (nearby) different silage. Furthermore, the assembly comprises two different reels, each of which can be used for storing and rolling/unrolling a cover sheet therefrom. This means that the system may be used in conjunction with two cover sheets at the same time and at least two silages, which increases the efficiency of the silages and the assembly.

It should be noted that the reel drive unit for driving the first and/or second reel and the drive unit, which may be a fossil fuel powered engine or an electrical motor, may be integrated as a single drive unit which is used to both ends. Alternatively, the reel drive unit may also be a separate drive unit from the drive unit that is configured for moving the assembly.

According to the invention, the frame comprises a sub-frame that is detachably coupled to the frame and that may be placeable over or on the side walls of the silage, wherein the second reel is connected to the sub-frame.

By providing a detachable sub-frame, the flexibility and efficiency of the assembly is increased even further, due to the fact that the two reels can simultaneously be positioned on and/or over different silages to perform operations on that silage. The sub-frame may, when detached from the frame, for example be positioned over a first silage to perform a first action on that silage, whereas the frame may be simultaneously be positioned over a second, different silage to perform an action that silage. As a result, only a single assembly is required for performing operations on multiple silages and the use of two (expensive) assemblies is obviated.

An example of the advantage of this embodiment, with reference to a multi-silage system is provided below. Such multi-silage systems, for example having two or three silages, is increasingly used in agri-businesses. At any specific time during use of the silage system, each of the silages is used in a different manner or mode. A mode should be read as a particular functional description of actions that are performed in or with a silage at that particular time or time period. Such modes may for example include a filling mode, in which the silage is filled with newly harvested feed that is to be stored, a feed mode, in which the stored fodder is piecemeal removed over time for feeding the cattle on the farm, and an empty mode, in which the silage is completely empty and is ready to be filled with a new load of harvested product to be stored.

In an example of a three silage system, a first silage may be in an empty mode, which means that the silage is empty and a cover sheet that is associated with the silage is placed on the bottom or ground of the silage. A second silage may be in the filling mode, which means that the silage is filled with layers of product to be stored. During this operation, the frame may be positioned over the silage to cover the silage pile with the cover sheet. At the same time, a third silage is in feed mode, which means that the fodder stored in the silage is piecemeal removed for feeding the cattle. As a result, the cover sheet is not removed in a single operation, but is moved only a certain length each time period, for example each day, which length corresponds to the amount of fodder that needs to be removed for feeding that particular time period, i.e. day. As a result, the cover sheet is partially rolled up on the reel and partially still covering the (remaining) fodder in the silage during a prolonged period of time, in which period the reel can not be removed. By making use of a sub-frame, the sub-frame may advantageously be placed over or on the side walls of the silage in the 'feed mode', whereas the frame having the first reel may be used to cover and/or uncover the second silage (or the first silage for that matter). The assembly can therewith simultaneously be used on different silages at the same time and the use of multiple assemblies is obviated.

It should be noted that the abovementioned example is not limiting, since the assembly may also be used in conjunction with a single silage, two silages or a number of silages that is larger than the abovementioned three silages.

In an embodiment according to the invention, the assembly may comprise a first reel drive unit that is connected to the frame and is configured for driving the first reel, and a second reel drive unit that is connected to the sub-frame and that may be configured for driving the second reel.

By providing both the frame and the sub-frame with a reel drive unit, the first and second reel can be operated independently from each other. This provides the advantage that the second reel can be driven even when the sub-frame is detached from the frame. Simultaneously, the first reel can still be operated by the first drive unit that is positioned on the frame.

Each of the reels is preferably provided with a drive unit, which may be an electrical drive unit, a hydraulic drive unit or a different drive unit, wherein the drive unit may be couplable with an external energy source, which may be a different drive unit, a tractor, a shovel and/or a different energy source.

An advantage of having one (or even multiple) drive units for each of the reels is that the reels may be driven independently from each other. Furthermore, the drive units, especially when having electrical and/or hydraulic drive units may also simultaneously function as a brake, therewith preventing cover sheets on the reel from unrolling by external factors, such as wind, or gravity or combinations thereof. Alternatively, the drive unit may also be a hand-driven unit, for example a pendulum-handle for driving the unit by hand.

In an embodiment according to the invention, when the sub-frame is coupled to the frame, the first reel and the second reel extends substantially parallel to each other and the first reel is positioned, when viewed in a vertical direction, substantially above the second reel.

By positioning the first reel substantially above the second reel, when viewed in a vertical direction, a more stable position of the frame is achieved due to a balanced weight distribution.

In an embodiment according to the invention, the frame may comprise two substantially vertically extending legs and a shaft that may extend substantially horizontally between the two legs and is connected thereto, wherein the first reel may be mounted on the shaft.

The frame construction according to this embodiment provides a sturdy, cost-effective frame that is capable of supporting the weight of the first and second reel as well as the sub-frame. Preferably, the frame is constructed from steel, preferably stainless steel, yet may be manufactured from another suitable material, which may also include reinforced carbon fiber. The legs that support the shaft are preferably formed by A-frames, which provided excellent stability and weight distribution to the ground on which the frame is moveable. It is also possible to provide inverted T-frames as legs.

The frame may be provided with a rotatable shaft that is connected to the reel drive unit, wherein the first reel is fixedly connected with the shaft and is rotatable therewith. Alternatively, the shaft may also be fixedly connected to the legs, wherein the first reel is rotatably mounted on the shaft and is driven by the reel drive unit.

In an embodiment according to the invention, the sub-frame may comprise two substantially vertically extending legs and a shaft that extends substantially horizontally between the two legs, wherein the second reel is mounted on the shaft.

The sub-frame construction according to this embodiment provides a sturdy, cost-effective sub-frame that is capable of supporting the weight of the first and second reel as well as the sub-frame. Preferably, the frame is constructed from steel, preferably stainless steel, yet may be manufactured from another suitable material, which may also include reinforced carbon fiber. The legs that support the shaft are preferably formed by A-frames, which provided excellent stability and weight distribution to the ground on which the frame is moveable. Since the sub-frame is only required to support the weight of a single reel (i.e. the second reel), the sub-frame may be provided with slightly different structural properties than the frame, which is configured for supporting both the first reel and the sub-frame having the second reel.

The sub-frame may be provided with a rotatable shaft that is connected to the first or second reel drive unit, wherein the second reel is fixedly connected with the shaft and is rotatable therewith. Alternatively, the shaft may also be fixedly connected to the legs, wherein the second reel is rotatably mounted on the shaft and is driven by the first or second reel drive unit.

In an embodiment according to the invention, a width of the frame may be larger than a width of the sub-frame, such that the sub-frame is placeable between the legs of the frame.

In a currently preferred embodiment, the sub-frame is designed to be placed between the legs of the frame and beneath the first reel of the frame. This allows for an easy coupling and detaching of the sub-frame to the frame, preferably by lifting and subsequently coupling the sub-frame to the frame. The coupling may be provided from a first side of the frame or a second side of the frame. Preferably however, the sub-frame is couplable from either side of the frame. This increases the flexibility of use of the frame according to the invention, for example when two different silages are positioned across from each other and the frame is moved between them. The frame can in such a situation be moved in a straight line, rather than having to be rotated over 180°.

In an embodiment according to the invention, the sub-frame comprises two supports that are placeable on the side walls of the silage and a shaft that extends substantially horizontally between the two supports, wherein the second reel is mounted on the shaft.

The sub-frame may be configured to be placed on the side walls of a silage in order to reduce the width of the assembly. In this configuration, the sub-frame is preferably adapted to fit between and underneath the frame, which is placed over the side walls.

Furthermore, the sub-frame may be provided with a rotatable shaft that is connected to the first or second reel drive unit, wherein the second reel is fixedly connected with the shaft and is rotatable therewith. Alternatively, the shaft may also be fixedly connected to the supports, wherein the second reel is rotatably mounted on the shaft and is driven by the first or second reel drive unit.

In an embodiment according to the invention, in which the sub-frame is provided with supports and is configured to be placed on the side walls of the silage, the sub-frame may be provided with non-driven wheels for moving the sub-frame along a length of the silage and, preferably with a drive unit that is configured for driving the wheels.

In an embodiment according to the invention, the assembly may comprise coupling means that are configured for coupling the frame and the sub-frame, wherein the coupling means preferably may also comprise lifting means that are configured for lifting the sub-frame in a vertical direction such that the sub-frame may be lifted from respectively the ground or the side walls of the silage system.

A coupling between the frame and the sub-frame can be provided in a large variety of different constructions. The coupling means may for example be static coupling means, such as an opening or holder on the frame and a corresponding downwardly extending pin or hook on the sub-frame, wherein the pin can be lowered into the opening for coupling the frame and the sub-frame. Alternatively, the frame may comprise an upwardly extending pin and the sub-frame may be provided with a holder or opening, wherein the opening in or on the sub-frame is lowered over the pin of the frame to establish the coupling. Other options are however also possible, which may include a magnetic coupling, a hydraulic coupling or a different type of mechanical coupling. Furthermore, the coupling means may also comprise lifting means to lift sub-frame for coupling the sub-frame to the frame. Moreover, the lifting means and the coupling means may even be integrated in a single unit, such as a hydraulic lifting cylinder having a flat supporting end that is configured to connected with a substantially horizontal projection of the sub-frame to lift and preferably lock the sub-frame to the frame.

Alternatively, the frame may also be configured to be lowered, such that the frame the sub-frame can be coupled after which the frame is lifted again.

In an embodiment according to the invention, the cover sheet may have a length and a width and may be provided with a number of channels that may be fillable with a fluid, wherein the channels may extend over substantially an entire length of the cover sheet and may be mutually spaced apart in the width direction of the cover sheet.

By providing the cover sheet with a number of fillable channels, the cover sheet is, during covering the silage pile, weighted down on the silage pile to obtain a good sealing of the cover sheet on the silage pile. In order to obtain a good sealing, the channels are mutually spaced apart over the width of the cover sheet. The channels are, after placing the cover sheet, filled with fluid to increase the weight and obtain the sealing.

The width of the cover sheet is preferably substantially equal to the width of the silage, and wherein the cover sheet is configured to be placed on and removed from the silage in a lengthwise direction.

It should be noted that the fillable channels may be channels that are integrated into the cover sheet or may be external channels, such as flexible or rollable tubes or pipes or hoses, that are connected to the cover sheet, for example by means of welding, stitching or glueing. The channels are provided to obtain a proper fixation of the cover sheet on the silage pile and to obtain a good sealing of the cover sheet to prevent water and/or air to contact the stored fodder, which may lead to rotting and/or deterioration.

In an embodiment according to the invention, a channel may be present near each longitudinal edge of the cover sheet for pressing the cover sheet to the side walls of the silage during use of the cover sheet, and the channels that extend along the longitudinal edges of the cover sheet may have a larger diameter than the channels that are extend in a longitudinal middle section of the cover sheet.

In order to obtain a good seal near the edges of the silage, the cover sheet is preferably provided with a channel, which may be an integrated channel or a connected hose, pipe or tube, near the edges of the cover sheet. These channels may have a (slightly) larger diameter or may be manufactured from heavier material than the other channels in order to provide extra sealing capacity near the edges, where entrance of water and/or air is most likely to occur.

In an embodiment according to the invention, one or both outer ends of the cover sheet, when viewed in the longitudinal direction of the cover sheet, may be provided with a hose, channel or weight that extends perpendicular to the longitudinal direction over substantially the entire width of the cover sheet end, wherein the hose, channel or weight cooperates with the channels that extend along the longitudinal edges of the cover sheet for forming a fluid reservoir for holding a fluid.

Preferably, the all outer edges of the cover sheet are provided with a channel, pipe, hose or weight to establish a good sealing of the cover on the silage pile. Furthermore, the channels near the outer edges on the longitudinal sides of the sheet, which are positioned near open sides of the silage, function as reservoirs for holding a fluid, which ascertains that the outer ends are held down on to the ground or bottom surface.

In an embodiment according to the invention, the cover sheet may comprise flexible connections that may be connectable to the first or the second reel for connecting the cover sheet with a reel on which the cover sheet is to be rolled, wherein the flexible connections may be provided near an outer edge of the cover sheet, when viewed in a longitudinal direction thereof.

By providing an end portion of the cover sheet with flexible connections, it becomes possible to keep the cover sheet (indirectly) connected to the reel, while still allowing the cover sheet to rest on the ground or bottom to achieve a good sealing. The connections are required to be at least partially flexible in order to be rollable onto the reel and to prevent breaking or cracking due to severe weather conditions. The flexible connection may be formed of cloth, flexible plastics, woven material or any other suitable material that is capable of supporting the weight of end portion of the cover sheet during lifting towards the reel on which the cover sheet is to be placed.

In an embodiment according to the invention, the first reel and/or the second reel, when viewed along the longitudinal direction, may have a number of first portions having a first diameter and may have a number of second portions having a second diameter, wherein the first diameter may be larger than the second diameter, and wherein the second portions having the second diameter may, in use of the assembly, be aligned with the presence of channels in a cover sheet to be rolled onto the respective reel.

By providing the first and/or second reel with a dentured surface, i.e. having reels having to different diameters along its length, a corrugated upper surface of a rolled-up cover sheet may be obviated.

In existing cover sheets, when rolling the cover sheet onto the reel, the channels that are formed in the cover sheet are flattened and have a slightly greater thickness than the other parts of the cover sheet. As a result, during rolling of the cover sheet on the reel, areas with an increased thickness are formed and a corrugated upper surface of the roll is formed.

In this embodiment, the thicker parts of the cover sheet that are formed by the channels are fall within the portions of the reel having a reduced thickness, resulting in a smooth surface of the rolled-up cover sheet, when viewed along the longitudinal direction of the cover sheet (on the reel).

Preferably, the reel is designed in conjunction with the reel to ascertain that the increased thickness of the channels and the diameters of the reel corresponds with each other to allow a smooth surface to be achieved during rolling up of the cover sheet.

In an embodiment according to the invention, the flexible connections, when viewed along a width of the cover sheet, may be connected to the cover sheet between the channels, wherein a thickness of the flexible connections may be adapted to the channels, in that the flexible connections compensate for an increased thickness of the cover sheet at the channels, when the cover sheet is in a rolled-up position.

By adapting the thickness of the flexible connections and connection them between the channels of the cover sheet, the cover sheet can be rolled up in an orderly fashion in that the upper surface of the rolled up cover sheet is substantially flat.

In conventional cover sheets, when rolling the cover sheet onto the reel, the channels that are formed in the cover sheet are flattened and have a slightly greater thickness than the other parts of the cover sheet. As a result, during rolling of the cover sheet on the reel, areas with an increased thickness are formed and a corrugated upper surface of the roll is formed. Using the thickness and position of the flexible connections allows the cover sheet to be rolled up in a way that a substantially flat upper surface of the rolled-up cover sheet is achieved.

It should be noted that the following embodiments of the invention that are directed towards the assembly comprising the cover sheet are also encompassing the use of the cover sheet as claimed without combination with the assembly according to the invention as described above. This includes the use of the cover sheet as claimed in existing assemblies that are provided with a cover sheet.

In an embodiment according to the invention, the cover sheet may have a first thickness and the cover sheet may be provided with a number of areas that have a thickness that is greater than the first thickness, wherein the areas may be positioned between the channels and may be regularly spaced in a longitudinal direction of the cover sheet.

The embodiment of the invention allows the cover sheet to be rolled in an orderly fashion in that the upper surface of the rolled up cover sheet is substantially flat. When rolling the cover sheet onto the reel, the channels that are formed in the cover sheet are flattened and have a slightly greater thickness than the other parts of the cover sheet. As a result, during rolling of the cover sheet on the reel, areas with an increased thickness are formed and, in areas without channels, the roll is provided with air pockets. A corrugated upper surface of the roll is than formed.

By positioning areas with an increased thickness along the longitudinal length of the cover sheet, a more even, flat surface can be obtained when rolling the cover sheet onto the reel. The thickened areas compensate the increased thickness of the (rolled) cover sheet formed by the channels, thus providing a substantially flat upper surface of the cover sheet. The increased thickness can be achieved using various different techniques, such as connecting additional layers onto the cover sheet in the specified areas or integrating fillers into the cover sheet at designation areas. Conversely, it may also comprise two layers of material between the channels and only a single layer of material in the areas in which the channels in the form of hoses, tubes or (rollable) pipes are connected.

In an embodiment according to the invention, the cover sheet may be provided with at least one resealable opening.

An increasing size of the silage makes it significantly more difficult to monitor the quality of the fodder that is stored in the silage. Using this embodiment, a simple and effective manner is provided to a user to take (vertical) samples of the stored silage pile in order to determine the composition, quality and other characteristics of the fodder that is stored, after which the opening is sealed again, preferably using sealing means provided on the cover sheet. This obviates the need of cutting or creating (irreparable) holes in the cover sheet, which would reduce the life-time and usability of the cover sheet and increase the risk of water and/or air entering the silage pile. Therewith, this embodiment solves a specific problem of reusable cover sheets, since this problem is not present in single use cover sheets (which are disregarded after the fodder is removed).

In an embodiment according to the invention, in which the cover sheet has at least one opening, the opening may be provided with a zipper.

The opening or openings in the cover sheet may advantageously be provided with a zipper, preferably a zipper that is water-resistant or impermeable to water, to close off the opening. A zipper forms a sturdy, reliable sealing means for the opening that is resistant to wear due to heavy use and/or weather conditions.

In an embodiment according to the invention, in which the cover sheet has at least one opening, the opening may be provided with a projection that extends upwardly, when viewed in a vertical direction, wherein the projection may be configured to cooperate with a cap, preferably a plastic cap, more preferably a PVC-cap, for recloseably closing the opening.

The opening or openings in the cover sheet may also be provided with an (slightly) upwardly extending projection that is configured to cooperate with a corresponding cap. The use of such a projection-cap assembly first of all provides a sturdy, reliable and durable means for sealing the opening. An additional advantage of the projection-cap assembly is that it provides a slightly alleviated surface compared to the surface of the cover sheet. As such, when placed between the channels, it compensates for the increased thickness of the cover sheet when rolled onto the reel, therewith also providing a smooth upper surface of the cover sheet when rolled onto a reel. The cap and the projection may for example be connected by means of clamping, Velcro or other means.

It should be noted that the opening, the projection and the cap may have any form, but preferably have a circular form. This allows the use of a threaded connection between the projection and the cap, which is easy to use.

In an embodiment according to the invention, the frame may be provided with a screen that has an open and a closed position, wherein the screen in the closed position may cover a front part of stored fodder in the silage, and wherein the screen in an open position is provided against or on the frame, wherein the screen is in an open position during movement of the assembly.

The screen provides a simple and effective manner to shield the fodder from outside influences such as rain, wind, sun and birds when the cover sheet is partially rolled onto the reel and when the silage is piecemeal emptied for use in feeding the cattle. In practice, it is noted that the silage is emptied in a piecemeal manner, which means that the cover sheet is partially rolled up on the reel, uncovering only the part of the fodder that is to be used that time period (mostly a day). This means that the remainder of the silage pile remains covered, apart from the front end from which the cover sheet is rolled. This opening to the fodder allows rain, sun, wind and birds access to the fodder, thus (quickly) reducing the quality of the fodder that is exposed.

The screen according to the invention provides a simple and effective way of shielding the fodder from such influences. Preferably, the screen is foldably or rollably connected to the frame on which the reel is positioned. It may be easily lowered and opened to respectively prevent and allow access to the fodder. Due to the fact that the screen is connected to the frame, it automatically moves along with the frame over time and is positioned correctly at any moment.

Preferably, the screen is connected in a foldable or rollable manner next to or slightly in front of the reel when viewed from a front end of the assembly. This ensures that the screen can be lowered even when the cover sheet is in (partially) rolled up position. Another preferred option is that the screen is provided on the first or second reel that is not carrying a cover sheet. This may for example mean that during use the second reel is provided with a (partially rolled up) cover sheet and the first reel is provided with the screen that is moveable between an open and a closed position independently of whether the cover sheet is rolled.

In an embodiment according to the invention the screen is moveably connected to the frame, wherein the screen, when viewed from a front end of the assembly, is moveable from a front position in which the screen is positioned front of the reel to a rear position in which the screen is positioned after the reel.

The advantage of a screen that is moveable between a front and a rear position with respect to the reel is that the screen can always be contiguous with the stored fodder. This means that the screen, independently of the position of the (partially rolled up) cover sheet is positioned against the front end of the silage pile. This substantially prevents wind, rain, sun and wildlife from reaching the front end of the silage. As a result, an improved storage is achieved.

In an embodiment according to the invention, the screen may be provided with a number of resealable openings.

Resealable openings in the screen may advantageously used to take samples of the fodder during storage without having to open up large portions of the stored fodder and thus exposing the stored fodder to the environment and/or birds that may feed on the fodder. Preferably, the resealable openings are provided with a zipper or a projection that is connectable with a cap. The openings are preferably provided with means that are easily resealable, such as a zipper and/or cap.

In an embodiment according to the invention, the screen has a first longitudinal end that is operably connected to the frame and that extends parallel to the longitudinal axis over substantially the entire width of the silage and a second longitudinal end that is provided with ballast, preferably a metal tube of pipe that extends over substantially the entire width of the screen, wherein the ballast is configured for executing a downward force on the screen such that the screen is hanging in a substantially vertical position in any position that is not the open position. Thus, the ballast ensures that the screen hangs substantially vertical in a closed position as well as in any position between the closed and the open position.

The advantage of providing ballast, preferably a metal tube or pipe, in the second end of the screen is that it ensures that the screen is kept in a vertical position and close to the front end of the silage pile. This substantially prevents weather conditions (sun, rain, wind) and wildlife (such as birds) from accessing the stored fodder in the silage pile. As a result, an improved storage is achieved in which the quality of the fodder is kept high and constant.

In an embodiment according to the invention, the screen may be provided with rigid elements or be provided as a number of interconnected rigid elements, such as plates or interconnected tubes, wherein the rigid elements extends over substantially the entire width of the silage and wherein the rigid elements, in a closed position, extend over substantially the entire height of the silage.

The screen in this embodiment has the advantage that it can be used to provide a substantially hermetically seal the silage pile. Preferably, the screen is formed of metal or thermohardened plastic plates or tubes that are connected to each other to form a door-like structure that seals the silage pile. Furthermore, the door-like structure may at the outer ends that are near the silage walls be provided with rubber strips for sealingly engaging the silage walls.

This allows a substantially sealing engagement to be achieved with the silage walls, therewith conserving the quality of the fodder in the silage by reducing the amount of outside air that can access the silage.

In an embodiment according to the invention, the screen may be slidably connected to the frame in that it is slidable in a direction parallel to the width direction of a silage.

A 'curtain-like' solution as provided in this embodiment provides a simple and effective way of opening and closing the screen to gain access to the stored fodder in the silage.

It should be noted that the screen according to this embodiment may also be used in conjunction with existing assemblies and is not limited to use in the assembly according to the invention.

In an embodiment according to the invention, the screen may be connected to the sub-frame, wherein the screen is in the folded position during movement of the sub-frame.

Alternatively or additionally, the screen may be connected to the sub-frame of the assembly. Preferably, when having a frame and a sub-frame, each is provided with a screen so as to allow both the frame and the sub-frame to be used in conjunction with a screen.

In an embodiment according to the invention, the screen may be disconnectably connected to the flexible connections or the flexible connections may be integral part of the screen.

The screen may be advantageously provided on either one of both of the first and the second reel. This means that a reel which is not in use for carrying a cover sheet may be used to carry a screen. The screen may therefore be connectable to the flexible connections or the flexible connections may be part of the screen in that the screen also forms the flexible connections. This means that the screen is provided on one of the two reels, whereas the cover sheet is (at least partially) rolled up on the other reel. When using a subframe having the second reel, the screen is preferably provided on the first reel and the cover sheet is preferably provided on the second reel. It may however be conversely as well. An advantage of this embodiment is that the frame does not require any constructional features for connecting the screen. This reduces cost of the assembly.

In an embodiment according to the invention, the assembly may comprise a controller for controlling operational actions to be performed with the assembly.

Various options are available to provide a controller for controlling the operational actions of the assembly. In a currently preferred embodiment, the controller is configured for receiving and executing user commands, for example by means of a remote control, a user interface, a graphical user interface and/or a combination thereof. Alternatively, it may also be possible to provide a user application ('app') and/or a computer programmable controller for remote and/or automatic control of the assembly.

In an embodiment according to the invention, the frame and/or the sub-frame may comprise an extendible shaft and/or extendible reel, for example a telescopic shaft and/or a telescopic reel.

This embodiment is specifically useful for providing an assembly for an existing silage or group of silages, since the width of the assembly may than be adapted to the width of the (existing) silage.

Moreover, this embodiment may also be used in combination with a frame having only a single reel, that is to be used for a single silage.

In an embodiment according to the invention, the assembly may comprise a coupling for coupling a vehicle, such as a tractor, to the assembly for moving the assembly. Preferably, the assembly is transported by means of a drive unit that is connected to the assembly, preferably the frame. However, it may also be possible to, alternatively or additionally, provide a coupling for coupling an external drive, such as a tractor.

The invention also relates to a silage system comprising:
- an assembly according to the invention; and
- at least one silage.

The silage according to the invention provides the same effects and advantages as the assembly according to the invention as described above.

In an embodiment of the silage according to the invention, the silage further comprises at least one sensor, and a controller for receiving signals from the at least one sensor and for performing at least one of processing the information, displaying the information, storing the information in a memory, providing a signal to an alarm unit to provide an alarm signal, combining signals from different sensors, and/or combinations thereof.

The silage and/or the assembly may be provided with sensors for measuring relevant information with regard to the silage pile and/or relaying and/or displaying the information to a user. This allows a user to more specifically and closely monitor the system.

The invention also relates to a method for covering and/or or uncovering a silage, the method comprising:
- providing an assembly and/or a silage system according to the invention;
- moving the frame over the silage;
- covering and/or uncovering the silage with the cover sheet.

The silage according to the invention provides the same effects and advantages as the assembly and the silage system according to the invention as described above.

Further advantages, features and details of the invention are elucidated on the basis of preferred embodiments thereof, wherein reference is made to the accompanying drawings, in which:
- Figure 1 shows a perspective view of an example of the assembly according to the invention;
- Figure 2 shows a front view of the example of figure 1;
- Figure 3 shows a side view of the example of figure 1.
- Figure 4 shows a cross section over line A-A in figure 3;
- Figure 5 shows a schematic example of a cover sheet according to the invention.

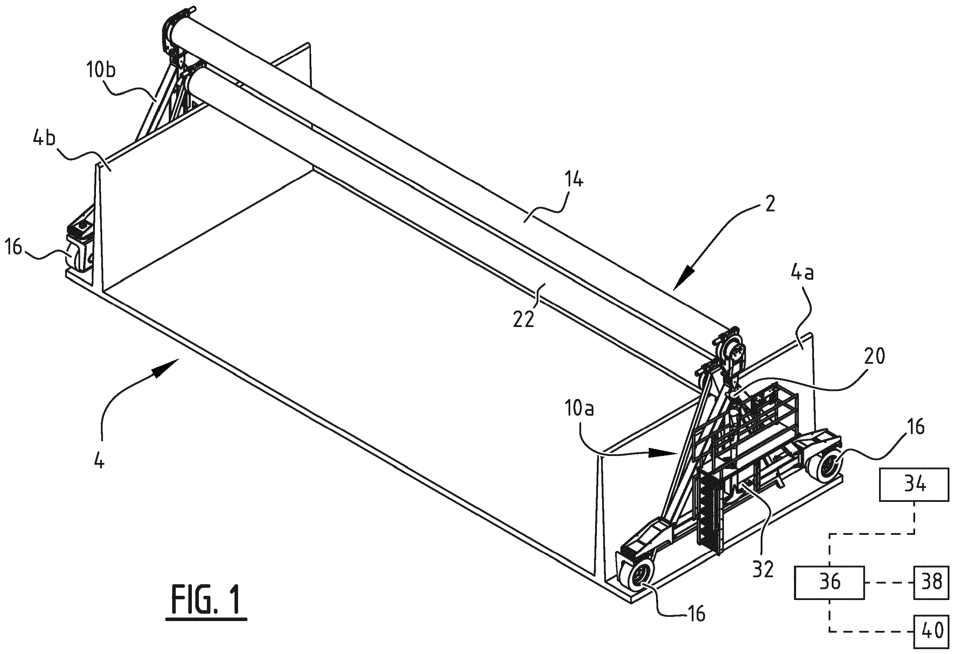

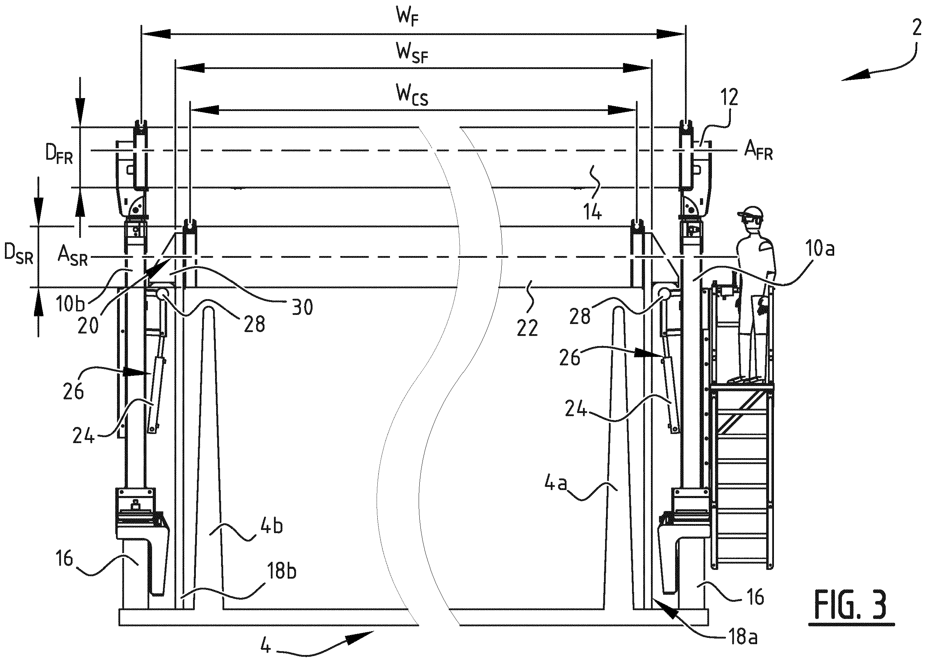

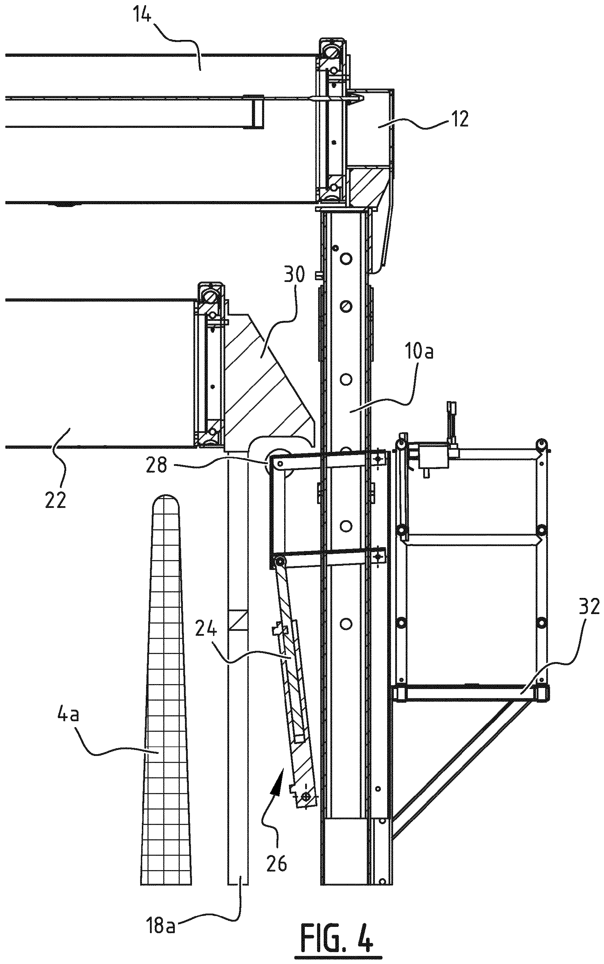

The example as provided in the figures (see figures 1-4) shows assembly 2 placed over (part of) silage 4 having side walls 4a, 4b. Assembly 2 is provided with frame 6 and sub-frame 8. Frame 6 consists of two legs or A-frames 10a, 10b, which are, on an upper side thereof, connected to each other by shaft 12. As such, frame 6 has a trestle-form. Shaft 12 supports first reel 14, which is rotatable around longitudinal axis A_{FR}, with first reel 14 being configured to carry a cover sheet (not shown). Frame 6 is placed on wheels 16, which allow the assembly to be moved. Wheels 16 are rotatable around a vertical axis over at least an angle of 90° to allow movement of assembly 2 in different directions.

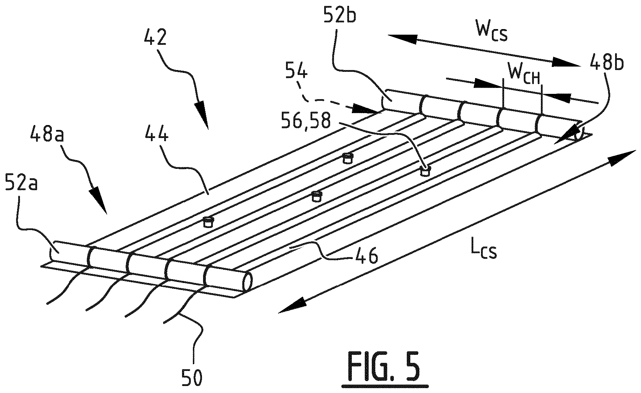

Sub-frame 8 comprises two legs or A-frames 18a, 18b that are, near an upper end thereof, connected by shaft 20 that, when sub-frame 8 is coupled to frame 6, extends substantially parallel to shaft 12 and reel 14. Shaft 20 is provided with second reel 22 and both extend along longitudinal axis F_{SR}. Second reel 22 is configured to carry a cover sheet (see figure 5).

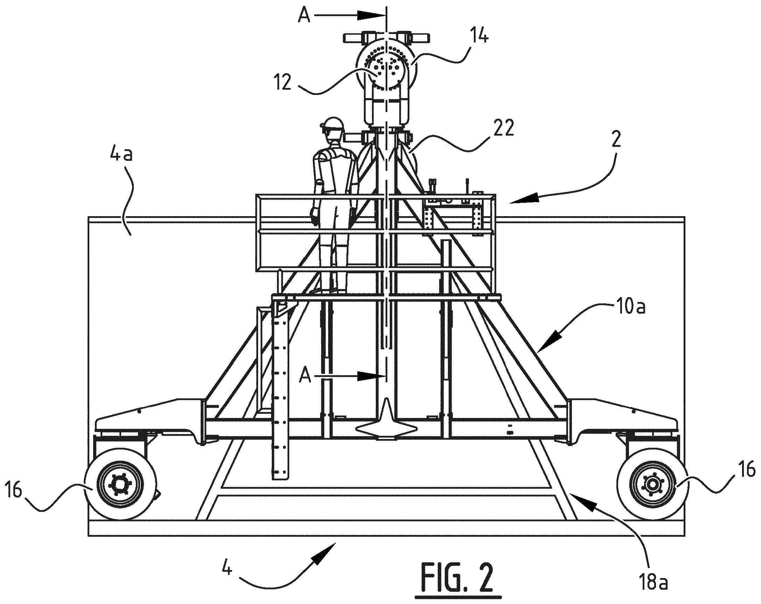

As is clearly visible from figure 2, width W_{F} of frame 6 is larger than width W_{SF} of sub-frame 8, which allows sub-frame 8 to be placed between or (in coupled position) held by frame 6. Frame 6 is also provided with lifting means 24, which are part of coupling means 26. Coupling means 26 in this example consist of lifting means 24 having a support part 28, which cooperates with projection 30 on sub-frame 8 for lifting and holding sub-frame 8.

In this example, assembly 2 is also provided with platform 32 which is accessible for a user and is configured to allow the user access to controller 34 of assembly 2. Preferably, controller 34 is operatively coupled to drive unit 36 that is configured for moving assembly 2. Preferably, controller 34 is also operatively connected to first reel drive unit 38 that is connected to first reel 14 and second reel drive unit 40 that is connected to second reel 22. In this example, two separate drive units 38, 40 are provided, each of which is exclusively configured to drive a reel. However, both reels 14, 22 may also be driven with a single drive unit that can operatively be coupled to and decoupled to reels 14, 22. In this example, each reel 14, 22 has a respective diameter D_{FR}, D_{SR}, which are equal.

In an example shown in figure 5, reusable cover sheet 42 that is useable with assembly 2 is shown. Cover sheet 42 has length L_{CS} and width W_{CS} and is provided with a number of cover sheet channels 46, two of which are located close to longitudinal edge 44 of cover sheet 42. Preferably, the channels 46 near edge 44 are slightly larger than centrally placed channels 46 in order to provide a proper sealing against side walls 10a, 10b of silage 4. Channels 46 are mutually spaced by channel distance W_{CH}. Furthermore, end portion 48a of cover sheet 42 is provided with flexible connections 50, which are configured for connecting cover sheet 42 to first reel 14 or second reel 22 of assembly 2. Each end portion 48a, 48b of cover sheet 42 is further provided with channel, tube or profile 52a, 52b, which, when cover sheet 42 is in use for covering a silage pile, form a reservoir 54 for holding fluid. This increases the sealing of cover sheet 42 at end portions 48a, 48b when the silage is in use as storage.

In this example, cover sheet 42 is also provided with opening 56, which is sealably and recloseably closed with cap 58. Preferably, cover sheet 42 has multiple openings 56 and openings 56 may also be closed off using other techniques that provide a sealable and recloseable closure.

In use, assembly 2 is preferably used in conjunction with at least two silages that are located near each other, of which one silage A is used for providing fodder (i.e. is being emptied over time) and the other silage B is ready to be filled with newly harvested silage to be used as fodder. In such a situation, sub-frame 8 is placed over the silage A by placing and decoupling it from frame 6 and is subsequently connected to the cover sheet thereof. The cover sheet is subsequently partially rolled up by the user in response to the need of the user for fodder, which allows the user to expose only the fodder that is required for that time period, such as a day. Frame 6 is, after placing and decoupling sub-frame 8, moved to silage B where it can be used for covering the silage pile during filling of silage B, wherein the cover sheet keeps pace with the silage pile growth or, alternatively, is used to place the cover sheet over silage pile in silage B after it has completely been filled.

The present invention is by no means limited to the above described preferred embodiments thereof. The rights sought are defined by the following claims within the scope of which many modifications can be envisaged.

## Claims

1. Assembly (2) for selectively covering and/or uncovering a silage (4) with a reusable cover sheet, the assembly (2) comprising:
- a frame (6, 8) that is moveable, wherein the frame (6) is configured for being positionable over outer sides of two substantially parallel extending longitudinal side walls (4a, 4b) of the silage (4) with at least part of the frame (12) extending over substantially an entire width of the silage, wherein the frame (6) comprises a sub-frame (8) that is coupled to the frame (6);
- a first reel position on the frame, wherein a first reel (14) is operatively connectable to the frame (6, 8) such that it extends along a longitudinal axis (A_{FR}) over substantially an entire width of the silage (4);
- a second reel position on the sub-frame (8), wherein a second reel (22) is operatively connectable to the sub-frame (8) such that it extends along a longitudinal axis (A_{SR}) over substantially the entire width of the silage (4);
- a reel drive unit (38, 40) for driving the first (14) and/or the second reel (22) for rolling a reusable cover sheet on and/or unrolling the reusable cover sheet from the first (14) and/or second reel (22) for respectively uncovering and covering the silage with the reusable cover; and
- a drive unit (36) for moving the assembly (2), wherein the assembly (2), during covering or uncovering of the silage (4) with the reusable cover, is movable along a longitudinal direction of the silage (4); and
**characterised in that** the sub-frame is detachably coupled to the frame; and wherein the assembly (2) is configured to be movable from one silage (4) to a different silage (B) by moving the assembly (2) along and past the longitudinal side walls (4a, 4b) of the silage (4).

2. Assembly according to claim 1, comprising a first reel drive unit (38) that is connected to the frame (6) and is configured for driving the first reel (14), and a second reel drive unit (40) that is connected to the sub-frame (8) and that is configured for driving the second reel (22).

3. Assembly according to claims 1 or 2, wherein, when the sub-frame (8) is coupled to the frame (6), the first reel (14) and the second reel (22) extend substantially parallel to each other and the first reel (14) is positioned, when viewed in a vertical direction, substantially above the second reel (22).

4. Assembly according to any one of the preceding claims 1 - 3, wherein the sub-frame (8) comprises two substantially vertically extending legs (18a, 18b) and a shaft (20) that extends substantially horizontally between the two legs (18a, 18b), wherein the second reel (22) is mounted on the shaft (20), and wherein a width (W) of the frame (6) is preferably larger than a width (W_{SF}) of the sub-frame (8), such that the sub-frame (8) is placeable between the legs (10a, 10b) of the frame (6).

5. Assembly according to any one of the claims 1 - 4, wherein the sub-frame (8) comprises two supports that are placeable on the side walls of the silage and a shaft that extends substantially horizontally between the two supports, wherein the second reel is mounted on the shaft.

6. Assembly according to any one of the claims 1 - 5, wherein the assembly comprises coupling means (26) that are configured for coupling the frame (6) and the sub-frame (8), wherein the coupling means (26) preferably also comprise lifting means (24) that are configured for lifting the sub-frame in a substantially vertical direction such that the sub-frame is lifted from respectively the ground or the side walls of the silage.

7. Assembly according to any one of the preceding claims, wherein the frame comprises two substantially vertically extending legs (10a, 10b) and a shaft (12) that extends substantially horizontally between the two legs (10a, 10b) and is connected thereto, wherein the first reel (14) is mounted on the shaft (12).

8. Assembly according to any one of the preceding claims, wherein the cover sheet (42) has a length (L_{CS}) and a width (W_{CS}) and is provided with a number of channels (46) that are fillable with a fluid, wherein the channels extend over substantially an entire length (L_{CS}) of the cover sheet (42) and are mutually spaced apart in the width direction of the cover sheet (42), and wherein a channel (42) is preferably present near each longitudinal edge (44) of the cover sheet (42) for pressing the cover sheet (46) to the side walls (4a, 4b) of the silage (4) during use of the cover sheet (42), and the channels (46) that extend along the longitudinal edges (44) of the cover sheet (42) have a larger diameter than the channels (46) that are extend in a longitudinal middle section of the cover sheet, and/or
wherein the cover sheet preferably comprises flexible connections (50) that are connectable to the first (14) or the second reel (22) for connecting the cover sheet with a reel on which the cover sheet is to be rolled, wherein the flexible connections are provided near an outer edge of the cover sheet, when viewed in a longitudinal direction thereof, and/or
wherein the flexible connections (50), when viewed along a width (W_{CS}) of the cover sheet (42), are preferably connected to the cover sheet between the channels, wherein a thickness of the flexible connections is adapted to the channels, in that the flexible connections compensate for an increased thickness of the cover sheet at the channels, when the cover sheet is in a rolled-up position, and/or
wherein the cover sheet has preferably a first thickness and wherein the cover sheet is provided with a number of areas that have a thickness that is greater than the first thickness, wherein the areas are positioned between the channels and are regularly spaced in a longitudinal direction of the cover sheet.

9. Assembly according to any one of the preceding claims, wherein the first reel and/or the second reel, when viewed along the longitudinal direction, has a number of first portions having a first diameter and a number of second portions having a second diameter, wherein the first diameter is larger than the second diameter, and wherein the second portions having the second diameter are, in use of the assembly, aligned with the presence of channels in a cover sheet to be rolled onto the respective reel.

10. Assembly according to any one of the preceding claims, wherein the cover sheet is provided with at least one resealable opening (56), and wherein the opening (56) is preferably provided with a zipper, and/or wherein the opening is preferably provided with a projection that extends upwardly, when viewed in a vertical direction, and wherein the projection is configured to cooperate with a cap (58), preferably a plastic cap, more preferably a PVC-cap, for recloseably closing the opening.

11. Assembly according to any one of the preceding claims, wherein the frame is provided with a screen that has an open and a closed position, wherein the screen in the closed position covers a front part of stored feed in the silage, and wherein the screen in an open position is provided against or on the frame, wherein, during movement of the assembly, the screen is in an open position, and wherein the screen is preferably connected to the sub-frame, wherein the screen is in the folded position during movement of the sub-frame.

12. Assembly according to any one of the preceding claims, wherein the assembly is provided with movement means, such as wheels or tracks, which are preferably rotatable to an angle of at least 90° to allow easy manoeuvring of the assembly and to allow it to be transported from one silage to a different silage.

13. Silage system comprising:
- an assembly (2) according to any one of the preceding claims; and
- at least one silage (4).

14. Silage system according to claim 13, further comprising:
- at least one sensor; and
- a controller for receiving signals from the at least one sensor and performing at least one of processing the information, displaying the information, storing the information in a memory, providing a signal to an alarm unit to provide an alarm signal, combining signals from different sensors, and/or combinations thereof.

15. Method for covering and/or or uncovering a silage, the method comprising:
- providing an assembly according to any one of the claims 1 - 12 and/or a silage system according to any one of the claims 13 - 14;
- moving the frame over the silage; and
- covering and/or uncovering the silage with the cover sheet.

## Patentansprüche

1. Anordnung (2) zum selektiven Abdecken und/oder Freilegen einer Silage (4) mit einer wiederverwendbaren Abdeckung, wobei die Anordnung (2) aufweist:
- einen Rahmen (6, 8), der beweglich ist, wobei der Rahmen (6) konfiguriert ist, um über Außenseiten von zwei sich im Wesentlichen parallel ersteckenden Längsseitenwänden (4a, 4b) der Silage (4) positionierbar zu sein, wobei sich wenigstens ein Teil des Rahmens (12) im Wesentlichen über eine gesamte Breite der Silage erstreckt, wobei der Rahmen (6) einen Teilrahmen (8) aufweist, der mit dem Rahmen (6) gekoppelt ist;
- eine erste Rollenposition auf dem Rahmen, wobei eine erste Rolle (14) betriebsfähig mit dem Rahmen (6, 8) verbindbar ist, so dass sie sich entlang einer Längsachse (A_{FR}) im Wesentlichen über eine gesamte Breite der Silage (4) erstreckt;
- eine zweite Rollenposition auf dem Teilrahmen (8), wobei eine zweite Rolle (22) betriebsfähig mit dem Rahmen (6, 8) verbindbar ist, so dass sie sich entlang einer Längsachse (A_{SR}) im Wesentlichen über eine gesamte Breite der Silage (4) erstreckt;
- eine Rollenantriebseinheit (38, 40) zum Antreiben der ersten (14) und/oder der zweiten Rolle (22) zum Aufrollen einer wiederverwendbaren Abdeckung und/oder Abrollen der wiederverwendbaren Abdeckung von der ersten (14) und/oder zweiten Rolle (22), um die Silage jeweils mit der wiederverwendbaren Abdeckung abzudecken oder sie freizulegen; und
- eine Antriebseinheit (36) zum Bewegen der Anordnung (2), wobei die Anordnung (2) während des Abdeckens oder Freilegens der Silage (4) mit der wiederverwendbaren Abdeckung entlang einer Längsrichtung der Silage (4) beweglich ist; und
**dadurch gekennzeichnet, dass** der Teilrahmen abnehmbar mit dem Rahmen gekoppelt ist; und
wobei die Anordnung (2) derart konfiguriert ist, dass sie von einer Silage (4) zu einer anderen Silage (B) beweglich ist, indem die Anordnung (2) entlang und vorbei an den Längsseitenwänden (4a, 4b) der Silage (4) bewegt wird.

2. Anordnung nach Anspruch 1, die eine erste Rollenantriebseinheit (38), die mit dem Rahmen (6) verbunden ist und konfiguriert ist, um die erste Rolle (14) anzutreiben, und eine zweite Rollenantriebseinheit (40), die mit dem Teilrahmen (8) verbunden ist und die konfiguriert ist, um die zweite Rolle (22) anzutreiben, aufweist.

3. Anordnung nach den Ansprüchen 1 oder 2, wobei die erste Rolle (14) und die zweite Rolle (22) sich, wenn der Teilrahmen (8) mit dem Rahmen (6) gekoppelt ist, im Wesentlichen parallel zueinander erstrecken und die erste Rolle (14) in einer Vertikalrichtung gesehen im Wesentlichen oberhalb der zweiten Rolle (22) positioniert ist.

4. Anordnung nach einem der vorhergehenden Ansprüche 1 - 3, wobei der Teilrahmen (8) zwei sich im Wesentlichen vertikal erstreckende Schenkel (18a, 18b) und eine Welle (20), die sich im Wesentlichen horizontal zwischen den zwei Schenkeln (18a, 18b) erstreckt, aufweist, wobei die zweite Rolle (22) auf der Welle (20) montiert ist, und wobei eine Breite (W) des Rahmens (6) vorzugsweise größer als eine Breite (W_{SF}) des Teilrahmens (8) ist, so dass der Teilrahmen (8) zwischen den Schenkeln (10a, 10b) des Rahmens (6) platzierbar ist.

5. Anordnung nach einem der Ansprüche 1 - 4, wobei der Teilrahmen (8) zwei Stützen, die auf den Seitenwänden der Silage platzierbar sind, und eine Welle, die sich im Wesentlichen horizontal zwischen den zwei Stützen erstreckt, aufweist, wobei die zweite Rolle auf der Welle montiert ist.

6. Anordnung nach einem der Ansprüche 1 - 5, wobei die Anordnung Kopplungseinrichtungen (26) aufweist, die zum Koppeln des Rahmens (6) und des Teilrahmens (8) konfiguriert sind, wobei die Kopplungseinrichtungen (26) vorzugsweise auch Hebeeinrichtungen (24) aufweisen, die konfiguriert sind, um den Teilrahmen in eine im Wesentlichen vertikale Richtung zu heben, so dass der Teilrahmen jeweils von dem Boden oder den Seitenwänden der Silage angehoben wird.

7. Anordnung nach einem der vorhergehenden Ansprüche, wobei der Rahmen zwei sich im Wesentlichen vertikal erstreckende Schenkel (10a, 10b) und eine Welle (12), die sich im Wesentlichen horizontal zwischen den zwei Schenkeln (10a, 10b) erstreckt und damit verbunden ist, aufweist, wobei die erste Rolle (14) auf der Welle (12) montiert ist.

8. Anordnung nach einem der vorhergehenden Ansprüche, wobei die Abdeckung (42) eine Länge (L_{CS}) und eine Breite (W_{CS}) hat und mit einer Anzahl von Kanälen (46), die mit einem Fluid füllbar sind, versehen ist, wobei die Kanäle sich im Wesentlichen über eine Gesamtlänge (L_{CS}) der Abdeckung (42) erstrecken und wechselseitig in der Breitenrichtung der Abdeckung (42) beabstandet sind, und wobei vorzugsweise ein Kanal (42) in der Nähe jedes Längsrands (44) der Abdeckung (42) vorhanden ist, um die Abdeckung (46) während der Verwendung der Abdeckung (42) an die Seitenwände (4a, 4b) der Silage (4) zu drücken, und wobei die Kanäle (46), die sich entlang der Längsränder (44) der Abdeckung (42) erstrecken, einen größeren Durchmesser als die Kanäle (46) haben, die sich in einem in der Längsrichtung mittleren Abschnitt der Abdeckung erstrecken, und/oder
wobei die Abdeckung vorzugsweise flexible Verbindungen (50) aufweist, die mit der ersten (14) oder der zweiten Rolle (22) verbindbar sind, um die Abdeckung mit einer Rolle zu verbinden, auf welche die Abdeckung aufgerollt werden soll, wobei die flexiblen Verbindungen in deren Längsrichtung gesehen in der Nähe eines Außenrands der Abdeckung bereitgestellt sind, und/oder
wobei die flexiblen Verbindungen (50) entlang einer Breite (W_{CS}) der Abdeckung (42) gesehen vorzugsweise zwischen den Kanälen mit der Abdeckung verbunden sind, wobei eine Dicke der flexiblen Verbindungen in der Hinsicht an die Kanäle angepasst ist, dass die flexiblen Kanäle eine erhöhte Dicke der Abdeckung an den Kanälen kompensieren, wenn die Abdeckung in einer aufgerollten Position ist, und/oder
wobei die Abdeckung vorzugsweise eine erste Dicke hat, und wobei die Abdeckung mit einer Anzahl von Bereichen versehen ist, die eine Dicke haben, die größer als die erste Dicke ist, wobei die Bereiche zwischen den Kanälen positioniert sind und in einer Längsrichtung der Abdeckung gleichmäßig beabstandet sind.

9. Anordnung nach einem der vorhergehenden Ansprüche, wobei die erste Rolle und/oder die zweite Rolle entlang der Längsrichtung gesehen eine Anzahl erster Abschnitte mit einem ersten Durchmesser und eine Anzahl zweiter Abschnitte mit einem zweiten Durchmesser hat, wobei der erste Durchmesser größer als der zweite Durchmesser ist, und wobei die zweiten Abschnitte, die den zweiten Durchmesser haben, in der Verwendung der Anordnung mit den vorhandenen Kanälen in einer Abdeckung ausgerichtet sind, die auf die jeweilige Rolle aufgerollt werden soll.

10. Anordnung nach einem der vorhergehenden Ansprüche, wobei die Abdeckung mit wenigstens einer wiederverschließbaren Öffnung (56) versehen ist, und wobei die Öffnung (56) vorzugsweise mit einem Reißverschluss versehen ist, und/oder wobei die Öffnung vorzugsweise mit einem Vorsprung versehen ist, der sich in einer Vertikalrichtung gesehen nach oben erstreckt, und wobei der Vorsprung konfiguriert ist, um mit einer Kappe (58), vorzugsweise einer Kunststoffkappe, bevorzugter einer PVC-Kappe, zusammenzuwirken, um die Öffnung wiederverschließbar zu verschließen.

11. Anordnung nach einem der vorhergehenden Ansprüche, wobei der Rahmen mit einer Abschirmung, die eine offene und eine geschlossene Position hat, versehen ist, wobei die Abschirmung in der geschlossenen Position einen vorderen Teil gelagerten Futters in der Silage abdeckt, und wobei die Abschirmung in einer offenen Position gegen oder auf dem Rahmen bereitgestellt ist, und wobei die Abschirmung während der Bewegung der Anordnung in einer offenen Position ist, und wobei die Abschirmung vorzugsweise mit dem Teilrahmen verbunden ist, wobei die Abschirmung während der Bewegung des Teilrahmens in der gefalteten Position ist.

12. Anordnung nach einem der vorhergehenden Ansprüche, wobei die Anordnung mit Bewegungseinrichtungen, wie etwa Rädern oder Schienen, die vorzugsweise in einem Winkel von wenigstens 90° drehbar sind, versehen ist, um ein leichtes Manövrieren der Anordnung zuzulassen und zuzulassen, dass sie von einer Silage zu einer anderen Silage transportiert wird.

13. Silagesystem, das aufweist:
- eine Anordnung (2) nach einem der vorhergehenden Ansprüche; und
- wenigstens eine Silage (4).

14. Silagesystem nach Anspruch 13, das ferner aufweist:
- wenigstens einen Sensor; und
- eine Steuerung zum Empfangen von Signalen von dem wenigstens einen Sensor und Durchführen wenigstens eines der folgenden: Verarbeiten der Informationen, Anzeigen der Informationen, Speichern der Informationen in einem Speicher, Bereitstellen eines Signals an eine Alarmeinheit, um ein Alarmsignal bereitzustellen, und Kombinieren von Signalen von verschiedenen Sensoren und/oder Kombinationen davon.

15. Verfahren zum Abdecken und/oder Freilegen einer Silage, wobei das Verfahren aufweist:
- Bereitstellen einer Anordnung nach einem der Ansprüche 1 - 12 und/oder eines Silagesystems nach einem der Ansprüche 13 - 14;
- Bewegen des Rahmens über der Silage; und
- Abdecken und/oder Freilegen der Silage mit der Abdeckung.

## Revendications

1. Ensemble (2) destiné à recouvrir et/ou découvrir de manière sélective un ensilage (4) avec une feuille de couverture réutilisable, l'ensemble (2) comprenant :
un bâti (6, 8) qui peut être déplacé, dans lequel le bâti (6) est configuré de manière à être positionné au-dessus des côtés externes de deux parois latérales longitudinales s'étendant sensiblement parallèlement (4a, 4b) de l'ensilage (4), au moins une partie du bâti (12) s'étendant sensiblement sur la totalité de la largeur de l'ensilage, dans lequel le bâti (6) comprend un bâti secondaire (8) qui est couplé au bâti (6) ;
un premier emplacement de bobine sur le bâti, dans lequel une première bobine (14) peut être couplée de manière opérationnelle au bâti (6, 8) de telle sorte qu'elle s'étend suivant un axe longitudinal (A_{FR}) sensiblement sur la totalité de la largeur de l'ensilage (4) ;
un second emplacement de bobine sur le bâti secondaire (8), dans lequel la seconde bobine (22) peut être couplée de manière opérationnelle au bâti secondaire (8) de telle sorte qu'elle s'étend suivant un axe longitudinal (A_{SR}) sensiblement sur la totalité de la largeur de l'ensilage (4) ;
une unité d'entraînement de bobine (38, 40) destinée à entraîner la première (14) et/ou la seconde (22) bobines afin d'enrouler sur ces dernières une feuille de couverture réutilisable et/ou de dérouler la feuille de couverture réutilisable à partir de la première (14) et/ou de la seconde (22) bobines de manière à respectivement découvrir et recouvrir l'ensilage avec la couverture réutilisable ; et
une unité d'entraînement (36) destinée à déplacer l'ensemble (2), dans lequel l'ensemble (2), au cours du recouvrement ou découvrement de l'ensilage (4) avec la couverture réutilisable, peut être déplacé suivant une direction longitudinale de l'ensilage (4) ; et
**caractérisé en ce que** le bâti secondaire est couplé de manière amovible au bâti ; et
dans lequel l'ensemble (2) est configuré de manière à pouvoir être déplacé à partir d'un premier ensilage (4) vers un ensilage (B) différent en déplaçant l'ensemble (2) le long et au-delà des parois latérales longitudinales (4a, 4b) de l'ensilage (4).

2. Ensemble selon la revendication 1, comprenant une première unité d'entraînement de bobine (38) qui est couplée au bâti (6) et est configurée de manière à entraîner la première bobine (14), et une seconde unité d'entraînement de bobine (40) qui est couplée au bâti secondaire (8) et qui est configurée de manière à entraîner la seconde bobine (22).

3. Ensemble selon les revendications 1 ou 2, dans lequel, lorsque le bâti secondaire (8) est couplé au bâti (6), la première bobine (14) et la seconde bobine (22) s'étendent sensiblement parallèlement l'une à l'autre et la première bobine (14) est positionnée, lorsqu'elle est vue dans une direction verticale, sensiblement au-dessus de la seconde bobine (22).

4. Ensemble selon l'une quelconque des revendications 1 à 3 précédentes, dans lequel le bâti secondaire (8) comprend deux pattes s'étendant sensiblement verticalement (18a, 18b) et un arbre (20) qui s'étend sensiblement horizontalement entre les deux pattes (18a, 18b), dans lequel la seconde bobine (22) est montée sur l'arbre (20), et dans lequel une largeur (W) du bâti (6) est, de préférence, supérieure à une largeur (W_{SF}) du bâti secondaire (8), de telle sorte que le bâti secondaire (8) peut être placé entre les pattes (10a, 10b) du bâti (6).

5. Ensemble selon l'une quelconque des revendications 1 à 4, dans lequel le bâti secondaire (8) comprend deux supports qui peuvent être placés sur les parois latérales de l'ensilage et un arbre qui s'étend sensiblement horizontalement entre les deux supports, dans lequel la seconde bobine est montée sur l'arbre.

6. Ensemble selon l'une quelconque des revendications 1 à 5, dans lequel l'ensemble comprend des moyens de couplage (26) qui sont configurés de manière à coupler le bâti (6) et le bâti secondaire (8), dans lequel les moyens de couplage (26) comprennent aussi, de préférence, des moyens de levage (24) qui sont configurés afin de soulever le bâti secondaire dans une direction sensiblement verticale de telle sorte que le bâti secondaire est soulevé respectivement par rapport au sol ou aux parois latérales de l'ensilage.

7. Ensemble selon l'une quelconque des revendications précédentes, dans lequel le bâti comprend deux pattes s'étendant sensiblement verticalement (10a, 10b) et un arbre (12) qui s'étend sensiblement horizontalement entre les deux pattes (10a, 10b) et est couplé à celles-ci, dans lequel la première bobine (14) est montée sur l'arbre (12).

8. Ensemble selon l'une quelconque des revendications précédentes, dans lequel la feuille de couverture (42) présente une longueur (L_{CS}) et une largeur (W_{CS}) et comporte un certain nombres de canaux (46) qui peuvent être remplis avec un fluide, dans lequel les canaux s'étendent sensiblement sur la totalité de la longueur (L_{CS}) de la feuille de couverture (42) et sont espacés mutuellement l'un de l'autre dans la direction transversale de la feuille de couverture (42), et dans lequel un canal (42) est, de préférence, présent à proximité de chaque bord longitudinal (44) de la feuille de couverture (42) afin de presser la feuille de couverture (46) sur les parois latérales (4a, 4b) de l'ensilage (4) au cours de l'utilisation de la feuille de couverture (42), et les canaux (46) qui s'étendent suivant les bords longitudinaux (44) de la feuille de couverture (42) présentent un diamètre supérieur aux canaux (46) qui s'étendent suivant une section centrale longitudinale de la feuille de couverture, et/ou
dans lequel la feuille de couverture comprend, de préférence, des liaisons flexibles (50) qui peuvent être raccordées à la première (14) ou la seconde (22) bobine afin de relier la feuille de couverture à une bobine sur laquelle la feuille de couverture doit être enroulée, dans lequel les liaisons flexibles sont formées à proximité d'un bord externe de la feuille de couverture, lorsqu'elles sont vues suivant une direction longitudinale de celles-ci, et/ou
dans lequel les liaisons flexibles (50), lorsqu'elles sont vues suivant une largeur (W_{CS}) de la feuille de couverture (42), sont, de préférence, reliées à la feuille de couverture entre les canaux, dans lequel une épaisseur des liaisons flexibles est adaptée aux canaux en ce que les liaisons flexibles compensent une épaisseur accrue de la feuille de couverture au niveau des canaux, lorsque la feuille de couverture est dans une position enroulée, et/ou
dans lequel la feuille de couverture présente, de préférence, une première épaisseur et dans lequel la feuille de couverture comporte un certain nombre de zones qui présentent une épaisseur qui est supérieure à la première épaisseur, dans lequel les zones sont positionnées entre les canaux et sont espacées régulièrement dans une direction longitudinale de la feuille de couverture.

9. Ensemble selon l'une quelconque des revendications précédentes, dans lequel la première bobine et/ou la seconde bobine, lorsqu'elles sont vues suivant la direction longitudinale, comportent un certain nombre de premières parties présentant un premier diamètre et un certain nombre de secondes parties présentant un second diamètre, dans lequel le premier diamètre est supérieur au second diamètre, et dans lequel les secondes parties présentant le second diamètre sont, au cours de l'utilisation de l'ensemble, alignées avec la présence de canaux sur une feuille de couverture destinée à être enroulée sur la bobine respective.

10. Ensemble selon l'une quelconque des revendications précédentes, dans lequel la feuille de couverture comporte au moins une ouverture amovible (56), et dans lequel l'ouverture (56) est, de préférence, équipée d'une fermeture éclair, et/ou dans lequel l'ouverture est, de préférence, équipée d'une saillie qui s'étend vers le haut, lorsqu'elle est vue dans une direction verticale, et dans lequel la saillie est configurée de manière à coopérer avec un couvercle (58), de préférence, un couvercle en matière plastique, plus préférablement un couvercle en PVC, afin d'obturer l'ouverture de manière amovible.

11. Ensemble selon l'une quelconque des revendications précédentes, dans lequel le bâti comporte un écran qui présente une position ouverte et une fermée, dans lequel l'écran, dans la position fermée, recouvre une partie avant des aliments stockés dans l'ensilage, et dans lequel l'écran, dans une position ouverte, est agencé contre ou sur le bâti, dans lequel, au cours du déplacement de l'ensemble, l'écran est dans une position ouverte, et dans lequel l'écran est, de préférence, couplé au bâti secondaire, dans lequel l'écran est dans la position repliée au cours du déplacement du bâti secondaire.

12. Ensemble selon l'une quelconque des revendications précédentes, dans lequel l'ensemble comporte un moyen de déplacement, tel que des roues ou des chenilles, qui peuvent, de préférence, tourner sur un angle d'au moins 90° afin de permettre la manœuvre facile de l'ensemble et de permettre son transport à partir d'un ensilage vers un ensilage différent.

13. Dispositif d'ensilage comprenant :
une ensemble (2) selon l'une quelconque des revendications précédentes ; et
au moins un ensilage (4).

14. Dispositif d'ensilage selon la revendication 13, comprenant, en outre :
au moins un capteur ; et
une unité de commande destinée à recevoir des signaux à partir du au moins un capteur et à exécuter au moins l'un d'un traitement des informations, de l'affichage des informations, de la mémorisation des informations dans une mémoire, de la fourniture d'un signal à une unité d'alarme afin de produire un signal d'alarme, de l'association de signaux à partir de différents capteurs, et/ou de combinaisons de ceux-ci.

15. Procédé de recouvrement et/de découvrement d'un ensilage, le procédé comprenant :
la préparation d'un ensemble selon l'une quelconque des revendications 1 à 12 et/ou d'un dispositif d'ensilage selon l'une quelconque des revendications 13 et 14 ;
le déplacement du bâti au-dessus de l'ensilage ; et
le recouvrement et/ou le découvrement de l'ensilage avec la feuille de couverture.
